# EUROPEAN PATENT APPLICATION

(11) **EP 4 763 308 A1**
(43) Date of publication of application: **24.06.2026**
(21) Application number: 24221880.8
(22) Date of filing: 19.12.2024
(51) Int. Cl.: B01D 39/16, B01D 39/20

(54) **FILTER MATERIAL FOR A FILTER FOR HIGH FLOW FILTRATION**

(71) Applicant: Carl Freudenberg KG, 69469 Weinheim (DE)
(72) Inventor: Dawar Dhingra, Saru, 69117 Heidelberg (DE)

(57) **Abstract**

A filter material for a filter for high flow filtration is provided comprising a filter medium, the filter medium being configured in pleats, the pleats preferably having a pleat height of at least 150 mm, and comprising a three-dimensional mat of entangled extruded polymeric filaments between layers of the filter medium of adjacent pleats, enabling to reduce the air flow resistance in the filter element as compared to a filter material comprising Aluminium spacers between layers of the filter medium of adjacent pleats.

## Description

The application pertains to an air filter, in particular a high efficiency particle air filter.

Current High Efficiency Particle Air filters (HEPA) for pharmaceutical & other air filtration applications with high air flow requirements comprise a filter element comprising a pleated filter medium and Aluminium spacers. The Aluminium spacers in such HEPA filters provide stability to the pleated filter medium within a filter element within a frame of the filter. Such HEPA filters may for example have dimensions of a length of 610 mm by a width of 610 mm by a height of 300 mm, although the dimensions of HEPA filters are not limited to this size.

Due to the large height (sometimes also called depth) of HEPA filters for high flow applications, a filter pack of pleated filter medium, which is customarily composed of a glass fiber paper, is not stiff enough to maintain the pleated shape of the filter medium. Additional measures need thus to be added to stabilize the shape of the filter pack of pleated filter medium. Aluminium spacers are therefore provided in such HEPA filters. However, the presence of Aluminium spacers between the pleats of the filter medium increases the air flow resistance in the filter element.

Due to the large dimensions of HEPA filter for high flow applications, pleating of the filter medium and positioning the Aluminium spacers between layers of the filter medium of adjacent pleats is customarily still done by manual pleating.

The Aluminium spacers also add considerable weight to the filter element, which makes pleating of the filter medium, and handling and installation of air the pleated filters more difficult. For example, a HEPA filter for high flow applications may comprise 2.3 to 2.5 kg of Aluminium spacers.

The HEPA filter comprising the Aluminium spacers and the (glass paper) filter medium can not be recycled as such. Therefore, at the end of the service life of the HEPA filter, the Aluminium spacers need to be separated from the glass paper filter medium before the separate constituents can be recycled.

The object of the invention is to prevent, or at least reduce, the disadvantages of the prior art.

The object is solved by the air filter according to claim 1.

A filter material for a filter for high flow filtration comprising a filter medium, the filter medium being configured in pleats, the pleats preferably having a pleat height of at least 150 mm, and a three-dimensional mat of entangled extruded polymeric filaments between layers of the filter medium of adjacent pleats enables to reduce the air flow resistance in the filter element as compared to a filter material comprising Aluminium spacers.

The Aluminium spacers comprised in known HEPA filters for high flow applications are made from a non-porous material. The Aluminium spacers are made from an Aluminium sheet which is corrugated and subsequently pleated to form the Aluminium spacers.

The three-dimensional mat of entangled extruded polymeric filaments comprised in the filter material according to the invention is a porous material, which thereby reducing the air flow resistance in the filter element as compared to a filter material comprising Aluminium spacers. The pressure drop over the filter material will therefore be lower, enabling to reduce the power consumption for passing the air flow to be filtered through the filter material.

The three-dimensional mat of entangled extruded polymeric filaments comprised in the filter material according to the invention preferably has a large open space. The open space of the three-dimensional mat of entangled extruded polymeric filaments is defined as the total volume between two planes sandwiching the three-dimensional mat of entangled extruded polymeric filaments over a given area, minus the volume occupied by the extruded filaments themselves, as a percentage. The open space of the three-dimensional mat of entangled extruded polymeric filaments may be at least 50%, preferably at least 75%, more preferably at least 85%, even more preferably at least 90%, even more preferably at least 95%, most preferably at least 98%.

The three-dimensional mat of entangled extruded polymeric filaments comprised in the filter material according to the invention may be covered by a nonwoven material to prevent, or at least reduce the risk, that the filter medium may be damaged by the polymeric filaments of the three-dimensional mat of entangled extruded polymeric filaments.

The filter material for a filter for high flow filtration is configured in pleats. The pleat height may be varied depending on the filter dimensions, in particular the length and the width of the filter, and the volume of the air flow to be filtered. The pleats have a pleat height of at least 150 mm, but preferably the pleats have a pleat height of at least 200 mm, or preferably of at least 250 mm, or preferably of at least 300 mm.

The filter material for a filter for high flow filtration is configured in pleats, wherein the filter material may comprise at least 25 pleats per meter thickness, preferably 50 pleats per meter thickness, or preferably 75 pleats per meter thickness, or preferably 510 pleats per meter thickness, or preferably 125 pleats per meter thickness, or preferably 150 pleats per meter thickness.

The filter material for a filter for high flow filtration comprises the three-dimensional mat of entangled extruded polymeric filaments between layers of the filter medium of adjacent pleats. The three-dimensional mat of entangled extruded polymeric filaments may be physically connected to the filter medium. In an embodiment, the three-dimensional mat of entangled extruded polymeric filaments is not physically connected to the filter medium to facilitate ease of manual pleating of filter medium and positioning the three-dimensional mat of entangled extruded polymeric filaments between layers of the filter medium of adjacent pleats, in particular for HEPA filters for high flow applications having large dimensions.

The filter material for a filter for high flow filtration comprises a three-dimensional mat of entangled extruded polymeric filaments. The thickness of the three-dimensional mat of entangled extruded polymeric filaments may be varied, for example depending on the filter dimensions, in particular the length and the width of the filter, and the volume of the air flow to be filtered. The three-dimensional mat of entangled extruded polymeric filaments may have a thickness of at least 2 mm, preferably at least 3 mm, more preferably at least 4 mm, to obtain a desirable low pressure drop over the filter. The thickness of three-dimensional mat of entangled extruded polymeric filaments is determined in accordance with EN 9863-1 at a load of 2 kPa.

The three-dimensional mat of entangled extruded polymeric filaments may have a thickness of at most 10 mm, preferably at most 9 mm, or preferably at most 8 mm, or preferably at most 6 mm. A thickness of the three-dimensional mat of entangled extruded polymeric filaments above 10 mm may result in a too large reduction in surface area of the filter medium comprised in the filter material within a filter of given dimensions.

In an embodiment, the filter material for a filter for high flow filtration comprises a three-dimensional mat of entangled extruded polymeric filaments between layers of the filter medium of adjacent pleats, wherein the three-dimensional mat of entangled extruded polymeric filaments has a thickness which is not constant, but which has a gradient to match the configuration of the pleats. For example, the pleats may be configured such to have a small distance between layers of the filter medium of adjacent pleats close to the folding point of a pleat and a larger distance between layers of the filter medium of adjacent pleats at a location furthest away from to the folding point of a pleat. The three-dimensional mat of entangled extruded polymeric filaments may be configured to taper from a largest thickness at a location furthest away from to the folding point of a pleat to a smallest close to the folding point of a pleat, wherein the largest thickness may be at least 2 mm, preferably at least 3 mm, more preferably at least 4 mm, and wherein the smallest thickness may be at most 3 mm, preferably at most 2 mm, more preferably at most 1 mm.

The filter material for a filter for high flow filtration comprises a three-dimensional mat of entangled extruded polymeric filaments. The apparent diameter of the entangled extruded polymeric filaments may be varied. The entangled extruded polymeric filaments have an apparent diameter of at least 0.1 mm, preferably of at least 0.2 mm, or preferably of at least 0.3 mm, or preferably of at least 0.4 mm, or preferably of at least 0.5 mm to enable to provide stabilization of the shape of the pleats of the filter medium. A higher apparent diameter of the entangled extruded polymeric filaments increases the stiffness of the three-dimensional mat of entangled extruded polymeric filaments enabling to stabilize the shape of the pleats of the filter medium at higher applied pressures.

The entangled extruded polymeric filaments have an apparent diameter of at most 2.5 mm, preferably of at most 2.0 mm, or preferably of at most 1.5 mm, or preferably of at most 1.2 mm, or preferably of at most 1.0 mm, or preferably of at most 0.8 mm. With increasing apparent diameter of the entangled extruded polymeric filaments, the weight of the three-dimensional mat of entangled extruded polymeric filaments can increase, which may make pleating of the filter medium, and handling and installation of air the pleated filters more difficult.

The filter material for a filter for high flow filtration comprises a three-dimensional mat of entangled extruded polymeric filaments. The weight of the three-dimensional mat of entangled extruded polymeric filaments may be varied, but preferably, the three-dimensional mat of entangled extruded polymeric filaments has a weight of at most 800 g/m², preferably at most 600 g/m², or preferably at most 400 g/m².

The three-dimensional mat of entangled extruded polymeric filaments may comprise a thermoplastic polymer. The three-dimensional mat of entangled extruded polymeric filaments may be composed for at least 75 wt.%, preferably for at least 90 wt.%, preferably for at least 95 wt.%, preferably for at least 98 wt.%, of a thermoplastic polymer.

In an embodiment, the three-dimensional mat of entangled extruded polymeric filaments consists of a thermoplastic polymer. The three-dimensional mat of entangled extruded polymeric filaments may comprise up to 25 wt.%, preferably up to 20 wt.%, more preferably up to 15 wt.%, even more preferably up to 10 wt.%, most preferably up to 5 wt.%, of commonly used additives, such as for example spinning auxiliaries, fillers, flame retardant materials, UV inhibitors, crystallization retarders/accelerators, plasticizers, heat stabilizers, antimicrobial additives, antistatic agents, colouring agents or any combination thereof.

The thermoplastic polymer comprised in the three-dimensional mat of entangled extruded polymeric filaments may be any thermoplastic polymer, but is preferably selected from a polyolefin polymer, in particular a polypropylene or a polyethylene, for example a high-density polyethylene, a polyester polymer, in particular a polyethylene terephthalate, or a polyamide polymer, in particular a polyamide-6.

In an embodiment, the thermoplastic polymer comprised in the three-dimensional mat of entangled extruded polymeric filaments is a polypropylene. In another embodiment, the thermoplastic polymer comprised in the three-dimensional mat of entangled extruded polymeric filaments is a polyester, preferably a polyethylene terephthalate.

The filter material for a filter for high flow filtration comprises a three-dimensional mat of entangled extruded polymeric filaments. The three-dimensional mat of entangled extruded polymeric filaments may be a three-dimensional random mat of entangled extruded polymeric filaments.

The three-dimensional random mat of entangled extruded polymeric filaments may be provided by any suitable process. The three-dimensional random mat of entangled extruded polymeric filaments may be provided by providing extruded polymeric filaments and collecting the extruded polymeric filaments into a three-dimensional structure by allowing the extruded polymeric filaments to bend and to come into contact with each other, preferably in a molten state. Bending of the extruded polymeric filaments can for example be initiated by collecting the extruded polymeric filaments into a water bath. US 5639543 A discloses an example of such a three-dimensional random mat of entangled filaments. The bending of the filaments is random and does not result in an array of sub-structures of a particular three-dimensional form within the three-dimensional random mat of entangled filaments. The three-dimensional random mat of entangled extruded polymeric filaments comprises two essentially flat main surfaces.

The three-dimensional mat of entangled extruded polymeric filaments may be a three-dimensional structured mat of entangled extruded polymeric filaments. The three-dimensional structured mat of extruded entangled filaments may be provided by any suitable process. Preferably, the three-dimensional structured mat of extruded entangled filaments is provided by extruding polymeric filaments and collecting the extruded polymeric filaments into a three-dimensional structure by allowing the filaments to bend, to entangle and to come into contact with each other, preferably in a still molten state. Bending and entangling of the extruded polymeric filaments are preferably initiated by collecting the extruded polymeric filaments onto a profiled surface, which defines the overall shape of the three-dimensional structured mat of extruded entangled filaments, as well as the shape of sub-structures within the three-dimensional structured mat of extruded entangled filaments. Preferably, the surface on which the extruded polymeric filaments are collected is profiled such that the three-dimensional structured mat of entangled extruded polymeric filaments is shaped into a three-dimensional form which comprises sub-structures shaped into a three-dimensional form including hills and valleys, hemispheres, positive and/or negative cuspates, cups and/or waffles, pyramids, truncated pyramids, U-grooves, V-grooves, truncated cones, cones, cylinders capped with a hemisphere, or any combination thereof.

The filter material for a filter for high flow filtration comprises a filter medium. The filter medium may comprise, or preferably consist of, a glass fiber wetlaid nonwoven, a meltblown nonwoven, a nanofiber nonwoven, a porous membrane, or any combination thereof. The filter material for a filter for high flow filtration comprises a filter medium which may preferably be a glass fiber filter medium, in particular a glass fiber wetlaid nonwoven.

However, in applications where the use of a glass fiber filter medium is undesired or not possible, the filter medium comprised in the filter material for a filter for high flow filtration may comprise a membrane material, which is preferably supported by a nonwoven, in particular by a spunbond nonwoven.

The filter medium comprises one or more polymeric materials. In an embodiment, the filter medium consists of one or more polymeric materials, which are preferably selected from polyolefins, such as a polypropylene or a polyethylene polymeric material, or polyesters, such as a polyethylene terephthalate, a polybutylene terephthalate or a polytrimethylene terephthalate.

The filter material for a filter for high flow filtration comprises filter medium and a three-dimensional mat of entangled extruded polymeric filaments. In an embodiment, the filter medium and the three-dimensional mat of entangled extruded polymeric filaments comprise polymeric materials of the same polymer family.

The filter medium and the three-dimensional mat of entangled extruded polymeric filaments may consist of polymeric materials of the same polymer family. In an embodiment, the filter medium and the three-dimensional mat of entangled extruded polymeric filaments consist of the same polymer.

The term members of the same polymer family is understood to mean that monomers comprised in a first polymer and monomers comprised in a second polymer are connected by the same type of chemical bond, as is well known to the person skilled in the art. For example, when in the first polymer two monomers are connected by an ester unit, i.e. an ester-bond, and in the second polymer two monomers are connected by an ester-bond, the first polymer and the second polymer are members of the polyester polymer family. When, for example, in the first polymer two monomers are connected by an amide unit, i.e. an amide-bond, and in the second polymer two monomers are connected by an amide-bond, the first polymer and the second polymer are members of the polyamide polymer family.

Preferably, at least 50% of the chemical bonds between monomers in the polymeric material comprised in the filter medium and at least 50% of the chemical bonds between monomers in the polymeric material comprised in the three-dimensional mat of entangled extruded polymeric filaments are the same chemical bonds. More preferably, at least 75% of the chemical bonds between monomers in the polymeric material comprised in the filter medium and at least 75% of the chemical bonds between monomers in the polymeric material comprised in the three-dimensional mat of entangled extruded polymeric filaments are the same chemical bonds. More preferably, at least 90% of the chemical bonds between monomers in the polymeric material comprised in the filter medium and at least 90% of the chemical bonds between monomers in the polymeric material comprised in the three-dimensional mat of entangled extruded polymeric filaments are the same chemical bonds. Even more preferably, at least 95% of the chemical bonds between monomers in the polymeric material comprised in the filter medium and at least 95% of the chemical bonds between monomers in the polymeric material comprised in the three-dimensional mat of entangled extruded polymeric filaments are the same chemical bonds. Most preferably, at least 98% of the chemical bonds between monomers in the polymeric material comprised in the filter medium and at least 98% of the chemical bonds between monomers in the polymeric material comprised in the three-dimensional mat of entangled extruded polymeric filaments are the same chemical bonds facilitating easier recycling of the filter material, for example at the end of the service of the filter material.

The filter material for a filter for high flow filtration may advantageously exclude any Aluminium spacer, facilitating easier recycling of the filter material, for example at the end of the service of the filter material.

The filter material for a filter for high flow filtration comprises a filter medium. The filter medium may comprise conductive fibers to allow any charge being build up in the filter medium to be dissipated, for example to a frame of the filter.

Furthermore, a filter is for high flow filtration is provided comprising the filter material according to the invention as disclosed herein above.

The filter comprises a filter material comprising a filter medium, the filter medium being configured in pleats, such that the filter comprises at least 10 layers of the filter medium, preferably at least 15 layers, or preferably at least 20 layers, or preferably at least 25 layers of the filter medium.

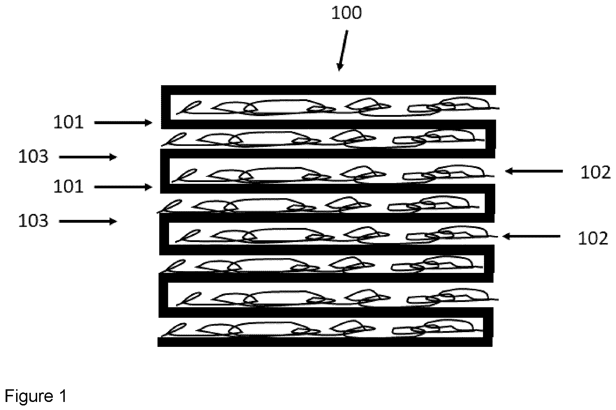

Figure 1 schematically depicts a filter material according to the invention. The filter material (100) comprises a filter medium being configured in pleats, which are depicted by the connection of layers (101, 103) of the filter medium. The filter material (100) comprises a three-dimensional mat of entangled extruded polymeric filaments (102) between layers (101, 103) of the filter medium of adjacent pleats.

### Comparative Example

A filter material for a filter for high flow filtration was provided comprising a HEPA filter medium which was a wetlaid glass fiber nonwoven and comprising Aluminium spacers between layers of the filter medium of adjacent pleats. The filter comprised 52 pleats per feet, i.e. 170 pleats per meter. The total weight of the filter material having dimensions of a length of 610 mm by a width of 610 mm by a height of 300 mm was 14 kg.

The pressure drop over the filter material was 250 to 270 Pa at a flow 3398 m³/hr (2000 cfm).

### Example

A filter material for a filter for high flow filtration was provided comprising a HEPA filter medium which was a wetlaid glass fiber nonwoven and a three-dimensional mat of entangled extruded polymeric filaments between layers of the filter medium of adjacent pleats. The three-dimensional mat of entangled extruded polypropylene filaments had a weight of 400 g/m² and was shaped into a three-dimensional form of v-grooves. The filter comprised 52 pleats per feet of thickness, i.e. 170 pleats per meter. The total weight of the filter material having dimensions of a length of 610 mm by a width of 610 mm by a height of 300 mm was 15 kg.

The pressure drop over the filter was 170 to 180 Pa at a flow 3398 m³/hr (2000 cfm), indicating good stability of the pleats. The pressure drop over the filter material comprising the three-dimensional mat of entangled extruded polymeric filaments between layers of the filter medium of adjacent pleats was lower as compared to the filter material comprising Aluminium spacers between layers of the filter medium of adjacent pleats.

## Claims

1. A filter material for a filter for high flow filtration comprising a filter medium, the filter medium being configured in pleats, the pleats preferably having a pleat height of at least 150 mm, and a three-dimensional mat of entangled extruded polymeric filaments between layers of the filter medium of adjacent pleats.

2. The filter material for a filter for high flow filtration according to claim 1, wherein the filter medium comprises, a glass fiber wetlaid nonwoven, a meltblown nonwoven, a nanofiber nonwoven, a porous membrane, or any combination thereof.

3. The filter material for a filter for high flow filtration according to any one or more of the preceding claims, wherein the pleats have a pleat height of at least 200 mm, preferably of at least 250 mm.

4. The filter material for a filter for high flow filtration according to any one or more of the preceding claims, wherein the three-dimensional mat of entangled extruded polymeric filaments is not physically connected to the filter medium.

5. The filter material for a filter for high flow filtration according to any one or more of the preceding claims, wherein the three-dimensional mat of entangled extruded polymeric filaments has a thickness of at least 2 mm, preferably at least 3 mm, more preferably at least 4 mm as determined in accordance with EN 9863-1 at a load of 2 kPa.

6. The filter material for a filter for high flow filtration according to any one or more of claims 1 to 5, wherein the three-dimensional mat of entangled extruded polymeric filaments has a thickness gradient configured to match the configuration of the pleats.

7. The filter material for a filter for high flow filtration according to any one or more of the preceding claims, wherein the entangled extruded polymeric filaments have an apparent diameter of at least 0.1 mm, preferably of at least 0.2 mm, or preferably of at least 0.3 mm, or preferably of at least 0.4 mm, or preferably of at least 0.5 mm.

8. The filter material for a filter for high flow filtration according to any one or more of the preceding claims, wherein the three-dimensional mat of entangled extruded polymeric filaments has a weight of at most 800 g/m², preferably at most 600 g/m², or preferably at most 400 g/m².

9. The filter material for a filter for high flow filtration according to any one or more of the preceding claims, wherein the entangled extruded polymeric filaments comprise a thermoplastic polymer, preferably selected from a polyolefin polymer, in particular a polypropylene or a polyethylene, a polyester polymer, in particular a polyethylene terephthalate, or a polyamide polymer, in particular a polyamide-6.

10. The filter material for a filter for high flow filtration according to any one or more of the preceding claims, wherein three-dimensional mat of entangled extruded polymeric filaments is a three-dimensional structured mat of entangled extruded polymeric filaments.

11. The filter material for a filter for high flow filtration according to claim 10 wherein the three-dimensional structured mat of entangled extruded polymeric filaments comprises three-dimensional sub-structures shaped into a three-dimensional form including hills and valleys, hemispheres, positive and/or negative cuspates, cups and/or waffles, pyramids, truncated pyramids, U-grooves, V-grooves, cones, truncated cones, cylinders capped with a hemisphere, or any combination thereof.

12. The filter material for a filter for high flow filtration according to any one or more of the preceding claims, wherein the filter medium comprises conductive fibers.

13. The filter material for a filter for high flow filtration according to any one or more of the preceding claims, wherein the filter material excludes an Aluminium spacer.

14. The filter material for a filter for high flow filtration according to any one or more of the preceding claims, wherein the filter material consists of polymeric materials.

15. A filter for high flow filtration comprising the filter material according to any one or more of the preceding claims.
